# FASCICULE DE BREVET EUROPEEN

(11) **EP 1 695 578 B1**
(45) Date de publication et mention de la délivrance du brevet: **25.02.2009**
(21) Numéro de dépôt: 04821089.2
(22) Date de dépôt: 15.12.2004
(51) Int. Cl.: H04W 8/18

(54) **PROCEDE DE SAUVEGARDE DE DONNEES PERSONNELLES D UN ABONNE A UN RESEAU DE TELECOMMUNICATIONS, SERVEUR ET DISPOSITIF ASSOCIES**
VERFAHREN UND VORRICHTUNG ZUR VERBESSERTEN SICHERUNGSSPEICHERUNG VON PERSONENGEBUNDENEN DATEN EINES TEILNEHMERS IN EINEM TELEKOMMUNIKATIONSNETZWERK UND ENTSPRECHENDER SERVER
METHOD FOR BACKING UP PERSONAL DATA OF A TELECOMMUNICATIONS NETWORK SUBSCRIBER, SERVER AND ASSOCIATED DEVICE

(30) Priorité: 19.12.2003 FR 0351130
(43) Date de publication de la demande: 30.08.2006
(73) Titulaire: Gemalto SA, 92190 Meudon (FR)
(72) Inventeur: MARTIN, Christophe, 13600 CEYRESTE (FR); SCHIRAR, Stéphane, F-13720 La Bouilladisse (FR)
(86) Numéro de dépôt international: PCT/EP2004/053507
(87) Numéro de publication internationale: WO 2005/069659

(56) Documents cités:
- WO-A-01/62029
- WO-A-03/007639
- WO-A-03/037015
- "ETSI TS 101 267 v8.2.2" 5 juillet 2000 (2000-07-05), ETSI , XP002296727 Digital cellular telecommunications (Phase 2+); Specification of the SIM Application Toolkit for the Subscriber Identity Module- Mobile Equipment (SIM-ME) interface (GSM 11.14 version 8.2.1) page 13, alinéa 4.2 - alinéa 4.3 page 14, alinéa 4.11 page 19, alinéa 6.1 - page 21, alinéa 6.2

## Description

L'invention concerne le domaine des réseaux de communications sans fil et plus particulièrement un procédé pour sauvegarder un fichier d'informations personnelles, par exemple un annuaire téléphonique mémorisé dans les appareils mobiles utilisant ces réseaux ou les cartes d'identification d'abonné associées.

Dans un tel réseau, tel que du type GSM, acronyme pour l'expression anglo-saxonne "Global System for Mobile Comnunication, des abonnés possèdent une carte SIM, SIM étant l'acronyme de l'expression anglo-saxonne "subscriber Identity Module". Cette carte SIM est personnalisée de manière à permettre à l'abonné d'avoir accès à différentes applications et/ou services. Elle contient en outre les informations personnelles, comme des fichiers d'annuaire téléphonique, d'agendas...

Actuellement les opérateurs permettent à leur abonné de sauvegarder ces informations personnelles sur un serveur à l'aide d'un support de télécommunication de réseau du type SMS (acronyme de l'expression angosaxonne «Short Message Services»).

La plupart des solutions techniques telles que divulguées dans les documents WO01/62029A ou encore WO03/037015A reposent sur un mécanisme de synchronisation des données mémorisées dans la carte et/ou mobile avec celles mémorisées dans une base de sauvegarde du serveur. Dans ce mécanisme, uniquement les données modifiées sont transférées de manière à optimiser l'utilisation du SMS en raison de son coût comme le décrit le document WO 03/007639A.

Le mécanisme actuel a l'inconvénient de requérir le transfert de toutes les informations lors de la toute première synchronisation ou mise à jour puisqu'il y a une détection par le réseau d'un changement de l'ensemble des données. De ce fait, l'abonné est contraint d'attendre un temps relativement long, pour que l'opération de première synchronisation soit complètement réalisée et pouvoir utiliser son mobile.

On estime à environ 5 mn le délai d'attente pour sauvegarder un répertoire de 255 numéros de téléphone avec noms associés.

La sauvegarde peut être provoquée manuellement sur l'initiative de l'utilisateur et nécessiter néanmoins un long délai d'indisponibilité du mobile pour l'utilisateur.

Un but de la présente invention est de trouver un mécanisme de sauvegarde des données de l'abonné sur un serveur d'un réseau de télécommunication, qui ne présente pas les inconvénients ci-dessus, les données étant disposées dans la carte et/ou dans le mobile.

A cet effet, l'invention a pour objet un procédé de sauvegarde de données personnelles d'un abonné à un réseau de communications sans fil, les données étant mémorisées dans un appareil mobile de communication et sauvegardées dans un serveur du réseau, dans lequel on prépare un premier sous-ensemble de données parmi un ensemble à sauvegarder que l'on transmet au serveur pour sauvegarde.

Il se distingue en ce qu'il comprend un mode de sauvegarde dit asynchrone selon lequel après la transmission d'un sous-ensemble au serveur, on diffère la sauvegarde d'un certain délai de manière à libérer le mobile pour l'utilisateur, et on reprend la sauvegarde à la fin du délai.

Selon d'autres caractéristiques du procédé:
- le serveur ou le mobile met en oeuvre un comptage du délai et transmet un signal de reprise à la carte à l'échéance du délai;
- le mobile met en oeuvre le comptage et transmet le signal de reprise sur instruction de la carte;
- le procédé comprend une étape préalable selon laquelle on détermine si le volume de données à sauvegarder ou le délai d'attente correspondant pour rendre le mobile disponible à l'utilisateur est supérieur à un seuil prédéterminé, dans le cas favorable on effectue la sauvegarde selon le mode de sauvegarde asynchrone, et dans le cas défavorable on effectue la sauvegarde selon un mode par défaut.

L'invention a également pour objet un serveur pour la sauvegarde de données personnelles d'un abonné à un réseau de communications sans fil, les données étant préalablement mémorisées dans un appareil mobile de communication ou une carte associée, ledit serveur étant apte à sauvegarder un premier sous-ensemble de données parmi un ensemble à sauvegarder.

Il se distingue en ce qu'il comprend un programme de sauvegarde "serveur" dit asynchrone apte à mettre en oeuvre les fonctions suivantes:
- réception et stockage d'un premier sous-ensemble de données et mise en mode d'attente selon une consigne de délai,
- et à la fin de la consigne de délai, reprise de la sauvegarde des sous-ensembles de données suivants.

L'invention a également pour objet un dispositif portable de communication sans fil d'un abonné à un réseau de communications, comportant des données mémorisées et un programme applicatif de sauvegarde apte à transmettre à un serveur pour sauvegarde un premier sous-ensemble de données parmi un ensemble de données à sauvegarder.

Il se distingue en ce que le programme applicatif du dispositif est apte:
- à différer d'un certain délai la sauvegarde d'un sous-ensemble de données subséquent au premier sous-ensemble de manière à rendre le dispositif utilisable par l'utilisateur,
- et à reprendre la sauvegarde à la fin du délai.

Le dispositif au sens de l'invention englobe tout appareil portable de communication sans fil (mobile), tel que PDA, assistant personnel ayant une fonction de communication sans fil... et fonctionnant avec ou sans carte à microcircuit, ainsi qu'une carte à microcircuit.

D'autres caractéristiques et avantages de la présente invention apparaîtront à la lecture de la description suivante d'exemples particuliers de réalisation, ladite description étant faite avec les dessins joints dans lesquels :
- la figure 1 est un schéma illustrant le procédé de l'invention selon un premier mode de mise en oeuvre,
- la figure 2 est un schéma illustrant le procédé de l'invention selon un second mode de mise en oeuvre,
- la figure 3 est un schéma illustrant le procédé de l'invention selon un troisième mode de mise en oeuvre,
- la figure 4 est un schéma illustrant une étape d'un sous-programme de sauvegarde de données complétant l'invention.

Dans l'exemple on utilise une architecture de communication sans fil pour réseau de type GSM, comportant des mobiles d'abonnés équipés de carte SIM 1, et un serveur 2 distant accessible par messages courts dits SMS. Les mobiles 3 peuvent comprendre d'autres appareils de communication tels que PDA, assistant personnel dotés d'une interface de communication sans fil.

Les données peuvent être stockées préalablement dans l'appareil mobile et/ou dans la carte. Dans l'exemple les données seront initialement dans la carte.

Le serveur contient une interface de communication pour recevoir et émettre des messages avec des mobiles et une base de données pour la sauvegarde de données personnelles des abonnés.

Le serveur comporte également dans une unité de traitement, un programme applicatif de sauvegarde "serveur" (propre au serveur) qui peut avoir différentes fonctions qui seront développées ultérieurement selon les variantes de l'invention.

Ce programme met en oeuvre au moins une fonction de réception d'au moins un message SMS contenant un premier bloc de données personnelles et de stockage de ce bloc.

Selon une variante préférée, le programme est apte mettre en oeuvre une consigne de délai. Cette consigne peut être dans lé programme du serveur ou reçue dans un message,SMS élaboré par la carte et /ou le mobile.

Le programme de sauvegarde serveur, par exemple, peut prévoir une étape de déclenchement d'une horloge et à la fin du temps d'attente demandé, prévoir d'entreprendre la poursuite de la sauvegarde. Pour cela, il peut élaborer et faire adresser au mobile et/ou la carte un message de reprise de la sauvegarde pour les blocs suivants.

D'autre part, le dispositif portable de communication sans fil est un mobile comportant une carte SIM. Dans l'exemple, le microcircuit de la carte comporte des données personnelles mémorisées et un programme applicatif de sauvegarde spécifique carte. Ce programme est de manière connue apte à transmettre au serveur pour sauvegarde au moins un premier sous-ensemble de données parmi un ensemble de données à sauvegarder.

Les données pourraient toutefois être stockées préalablement dans l'appareil mobile et/ou dans la carte.

Selon une variante de l'invention, le programme applicatif carte peut également être apte à espacer d'un certain délai la sauvegarde des différents sous-ensembles ou blocs de données de manière à rendre le dispositif utilisable par l'abonné entre deux sauvegardes de blocs de données.

De préférence, le programme de sauvegarde de la carte comporte plusieurs modes de sauvegarde sélectionnables par l'utilisateur, en particulier un mode normal 41 de sauvegarde et le mode asynchrone 40 conforme à l'invention. Les modes peuvent également être sélectionnés automatiquement comme expliqués ultérieurement.

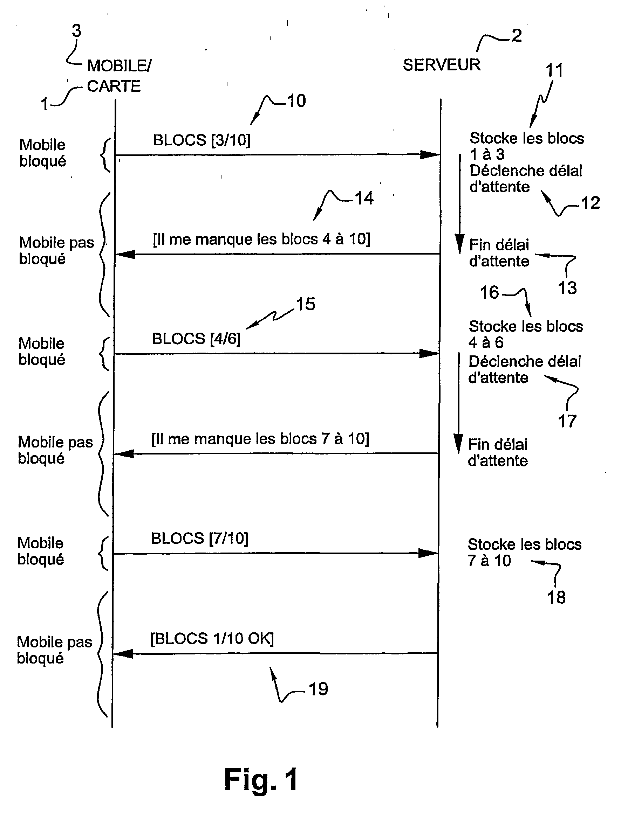

Le procédé de l'invention est décrit tout d'abord en relation avec la figure 1 selon le mode préféré.

A la demande de l'utilisateur ou de manière périodique, il s'établit une procédure connue de sauvegarde des données. Selon cette procédure, les données à sauvegarder sont scindées en un nombre n de sous-ensembles ou blocs et seront transmis lors de n messages de type SMS comportant chacun au moins un bloc, une indication du nombre de blocs à transmettre et une indication de l'ordre des blocs ou de la manière de les chaîner.

Dans l'exemple, la carte possède 10 numéros de téléphone et adresses à sauvegarder, formant 10 blocs. Dans un premier temps, la carte définie 3 sous-ensembles et se prépare à envoyer un sous-ensemble de 3 blocs qu'elle place dans une mémoire tampon (Buffer). Pour cela, elle demande au mobile de transmettre au serveur par message SMS le contenu de la mémoire tampon et le mobile s'exécute à l'étape 10.

Le serveur reçoit et stocke, à l'étape 11, le sous-ensemble dans sa base. En vertu de l'application de sauvegarde du serveur visée précédemment, l'invention permet de différer la sauvegarde d'un certain délai.

Entre-temps, la carte a stoppé l'envoi du bloc suivant et a rendu la main au mobile permettant ainsi de rendre disponibles les fonctions normales du mobile.

De son côté, le serveur a mis en oeuvre un comptage du délai 12 conformément à son programme correspondant. Pour ce comptage, l'unité de traitement du serveur exécute une étape du programme consistant à démarrer une horloge et à l'expiration 13 d'un certain temps, 2 minutes par exemple, elle fait transmettre un signal de reprise à la carte. Dans l'exemple, le serveur transmet un message 14 indiquant qu'il lui manque les blocs suivants blocs (4-10). Le serveur peut aussi mettre en oeuvre tout autre moyen équivalent d'espacement de la sauvegarde comme des horaires, des périodes régulières ou aléatoires, etc.

Le message qui est réceptionné par la carte via le mobile permet de "réveiller" la carte en ce sens qu'il est interprété par l'application de sauvegarde de la carte comme un signal de reprise de la sauvegarde.

En réponse à ce message, l'application de sauvegarde de la carte prépare les 3 blocs suivants (4-6) et les fait transmettre (étape 15) par le mobile sous forme de message SMS.

Les blocs suivants sont réceptionnés et stockés 16 comme précédemment et l'application refait un nouveau comptage de délai 17 et ainsi de suite.

Lorsque les derniers blocs ont été expédiés et stockés 18, le serveur fait envoyer un message d'accusé réception "OK" 19 et la sauvegarde est terminée sans avoir immobilisé le mobile de l'utilisateur de manière longue et continue.

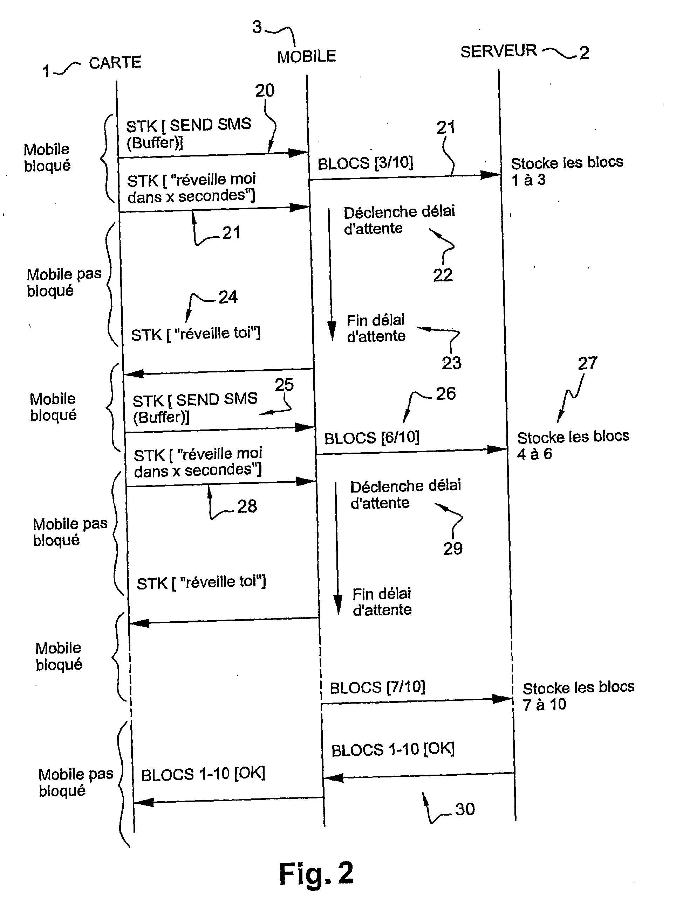

Une variante de mise en oeuvre est illustrée à la figure 2.

Après la transmission 20, 21 d'un sous-ensemble de blocs 3-10 au serveur, à l'aide d'une commande STK (Sim toolkit), adressée par la carte au mobile, l'application de sauvegarde de la carte "fait stopper la sauvegarde" et fait transmettre une autre commande STK dans laquelle, la carte demande au mobile de compter un délai et de "réveiller" la carte à l'échéance du délai 21.

Le mobile met alors en oeuvre 22 une horloge et à l'échéance 23, transmet un signal d'éveil à la carte 24 selon une commande STK. En réponse l'application de sauvegarde dans la carte fait préparer un second bloc de données (6/10) et le transmet au mobile à l'aide d'une commande STK pour l'envoyer au serveur.

Ensuite, comme précédemment, la carte demande au mobile de la réveiller dans X secondes (étape 28), ce qui est suivi d'effet par le déclenchement d'un autre comptage de délai 29 dans le mobile et ainsi de suite.

De son côté le serveur suit les instructions reçues de sauvegarde 27 des différents blocs reçus et lorsqu'il identifie le dernier bloc, il envoie un message d'accusé réception "OK" (étape 30).

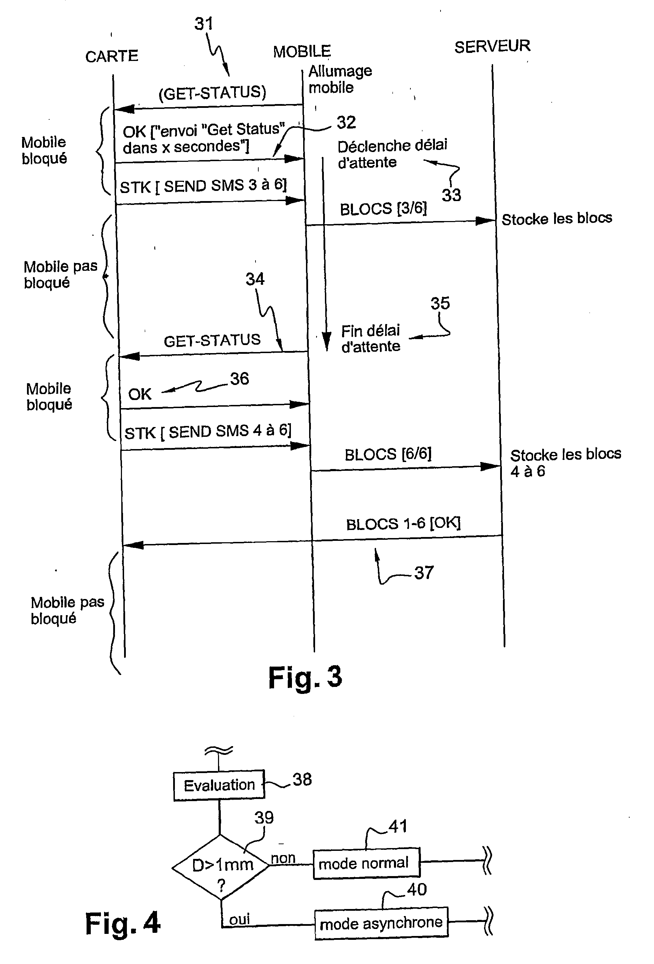

Dans une troisième variante illustrée à la figure 3, on détourne une instruction "GET STATUS" existante sur certains mobiles pour mettre en oeuvre le procédé et notamment réveiller la carte ou autrement dit comme signal de reprise de la sauvegarde.

Cette instruction est généralement utilisée par le mobile dès sa mise sous tension et ensuite régulièrement de manière que le mobile s'assure de la présence de la carte et que tout est en ordre.

Lors de la réception de cette instruction par la carte 31, l'application de la carte fait répondre OK et en profite pour ajouter une instruction 32 demandant au mobile de ré émettre la prochaine instruction "GET STATUS" dans un certain délai ou à une heure donnée.

Le mobile, sur instruction de la carte, met en oeuvre un comptage de délai 33 et transmet le signal "GET STATUS" 34 à l'échéance du délai (étape 35).

La sauvegarde des prochains blocs de données (4-6) s'effectuera en réponse à la réception de la prochaine instruction "GET STATUTS" et ainsi de suite jusqu'à ce que tous les blocs,soient envoyés et qu'un message d'accusé réception 37 comme précédemment soit reçu du serveur.

Dans chaque variante de mise en oeuvre, l'application de sauvegarde de la carte peut comprendre un sous-programme d'évaluation du temps escompté de sauvegarde 38 en fonction du volume de données à sauvegarder selon un mode normal.

L'application de la carte peut comprendre également une étape de test 39 pour opter automatiquement vers un mode de sauvegarde ou l'autre. Si le délai d'attente est supérieur à un seuil prédéterminé, par exemple 1 minute, on effectue la sauvegarde en mode asynchrone 40 selon l'invention. Si le délai d'attente est inférieur au seuil, la sauvegarde est effectuée selon le mode normal 41 par défaut. Le test peut également porter sur un volume de données correspondant au délai d'attente et le seuil peut être exprimé en volume de données.

L'application peut également proposer les deux modes à l'utilisateur en affichant un message à l'écran et obtenir une validation pour l'un ou l'autre mode.

A chaque demande d'accord, le message peut s'accompagner d'une indication du temps estimé pour la sauvegarde selon chaque mode.

## Revendications

1. Procédé de sauvegarde de données personnelles d'un abonné à un réseau de communications sans fil, les données étant mémorisées dans un appareil mobile de communication et sauvegardées dans un serveur du réseau, dans lequel on prépare un premier sous-ensemble de données parmi un ensemble à sauvegarder que l'on transmet au serveur pour sauvegarde,
**caractérisé en ce qu'**il comprend un mode de sauvegarde dit asynchrone 40 selon lequel après la transmission d'un sous-ensemble au serveur, on diffère (12, 22, 33) la sauvegarde d'un certain délai de manière à libérer le mobile pour l'utilisateur, et on reprend la sauvegarde à la fin du délai.

2. Procédé selon la revendication 1, **caractérisé en ce que** pour reprendre la sauvegarde, le serveur met en oeuvre un comptage du délai (12) et transmet un signal de reprise (14) à la carte à l'échéance du délai.

3. Procédé selon la revendication 1, **caractérisé en ce que** pour reprendre la sauvegarde, le mobile met en oeuvre un comptage du délai (22, 33) et transmet un signal de reprise (24, 35) à la carte à l'échéance du délai.

4. Procédé selon la revendication 3, **caractérisé en ce que** le mobile met en oeuvre le comptage et transmet le signal de reprise sur instruction de la carte.

5. Procédé selon la revendication 4, **caractérisé en ce que** la carte donne des instructions au mobile à l'aide de commandes STK.

6. Procédé selon la revendication 4, **caractérisé en ce que** la carte donne des instructions à l'aide de commande "GET STATUS".

7. Procédé selon la revendication 1, **caractérisé en ce qu'**il comprend une étape préalable d'évaluation (38) selon laquelle on détermine si le volume de données à sauvegarder ou le délai d'attente correspondant pour rendre le mobile disponible à l'utilisateur est supérieur à un seuil prédéterminé,
- dans le cas favorable on effectue la sauvegarde selon le mode de sauvegarde asynchrone 40,
- et dans le cas défavorable on effectue la sauvegarde selon un mode par défaut 41.

8. Serveur pour la sauvegarde de données personnelles d'un abonné à un réseau de communications sans fil, les données étant préalablement mémorisées dans un appareil mobile de communication, ledit serveur étant apte à sauvegarder un premier sous-ensemble de données parmi un ensemble à sauvegarder,
**caractérisé en ce qu'**il comprend un programme de sauvegarde "serveur" dit asynchrone apte à mettre en oeuvre les fonctions suivantes :
- réception et stockage d'un sous-ensemble de données et mise en mode d'attente selon une consigne de délai,
- et à la fin de la consigne de délai, reprise de la sauvegarde des sous-ensembles de données suivants.

9. Dispositif portable de communication sans fil d'un abonné à un réseau de communications, comportant des données mémorisées et un programme applicatif "dispositif" de sauvegarde apte à transmettre au serveur pour sauvegarde un premier sous-ensemble de données parmi un ensemble de données à sauvegarder,
**caractérisé en ce que** le programme applicatif "dispositif" est apte, selon un mode de sauvegarde asynchrone 40:
- à différer d'un certain délai la sauvegarde d'un sous-ensemble de données subséquent au premier sous-ensemble de manière à rendre le dispositif utilisable par l'utilisateur,
- et à reprendre la sauvegarde à la fin du délai.

10. Dispositif portable selon la revendication 9, **caractérisé en ce qu'**il comprend un mode de sauvegarde asynchrone 40 et un mode normal 41.

## Claims

1. A method for saving the personal data of a subscriber to a wireless communication network, data being stored in a communication mobile station and saved in a server of the network, wherein a first data sub-set is prepared from a set of data to be saved, and is transmitted to the server to be saved,
**characterized in that** it includes a so-called asynchronous saving mode 40 in which, after the transmission of a sub-set to the server, the saving operation is delayed (12, 22, 33) by a certain time so as to make the mobile available to the user, and the saving is resumed at the end of said waiting time.

2. A method according to claim 1, **characterized in that**, to resume the saving operation, the server performs the count-down of the waiting time (12) and transmits a resuming signal (14) to the card, when the waiting time has expired.

3. A method according to claim 1, **characterized in that** to resume the saving operation, the mobile station performs the count-down of the waiting time (22, 33) and transmits a resuming signal (24, 35) to the card, when the waiting time has expired.

4. A method according to claim 3, **characterized in that** the mobile performs the count-down and transmits the resuming signal upon an instruction from the card.

5. A method according to claim 4, **characterized in that** the card gives instructions to the mobile station using STK controls.

6. A method according to claim 4, **characterized in that** the card gives instructions using the "GET STATUS" control.

7. A method according to claim 1, **characterized in that** it includes a prior estimation step (38), wherein it is determined whether the volume of data to be saved or the waiting time necessary for make the mobile station available to the user is greater than a predetermined threshold,
- in a favorable case, the saving is performed according to the asynchronous saving mode 40,
- and in an unfavorable case the saving is performed according to a defect saving mode 41.

8. A server for saving the personal data of a subscriber to a wireless communication network, data being previously stored in a communication mobile station, said server being able to save a first data sub-set from a set of data to be saved,
**characterized in that** it includes a so-called asynchronous "server" saving program able to use the following functions:
reception and storage of a data sub-set and switching to a waiting mode, according to a waiting instruction,
upon completion of the waiting instruction, resuming the saving of the following data sub-sets.

9. A wireless portable device of a subscriber to a communication network including saved data and a saving "device" application program able to transmit to the server, for saving purposes, a first data sub-set from a set of data to be saved,
**characterized in that** the "device" application program is able, according to an asynchronous saving mode 40:
- to delay by a certain time the saving of a data sub-set following the first sub-set so as to make the device available to the user,
- and to resume the saving operation at the end of said waiting time.

10. A portable device according to claim 9, **characterized in that** it includes an asynchronous saving mode 40 and a normal mode 41.

## Patentansprüche

1. Sicherungsverfahren von persönlichen Daten eines Teilnehmers an einem schnurlosen Kommunikationsnetz, wobei die Daten in einem mobilen Kommunikationsgerät gespeichert und in einem Server des Netzes gesichert werden, bei dem man eine erste Daten-Untereinheit aus einer zu sichernden Einheit vorbereitet, die man an den Server zur Sicherung überträgt, **dadurch gekennzeichnet, dass** es einen so genannten asynchronen Sicherungsmodus 40 umfasst, bei dem man, nach der Übertragung einer Untereinheit an den Server, die Sicherung um eine bestimmte Frist verzögert (12, 22, 33), um das mobile Gerät für den Benutzer freizugeben, und man die Sicherung nach Ablauf dieser Frist fortsetzt.

2. Verfahren gemäß Anspruch 1, **dadurch gekennzeichnet, dass** der Server für die Fortsetzung der Sicherung eine Zählung der Frist (12) vornimmt und nach Ablauf der Frist ein Fortsetzungssignal (14) an die Karte überträgt.

3. Verfahren gemäß Anspruch 1, **dadurch gekennzeichnet, dass** das mobile Gerät für die Fortsetzung der Sicherung eine Zählung der Frist (22, 33) vornimmt und nach Ablauf der Frist ein Fortsetzungssignal (24, 35) an die Karte überträgt.

4. Verfahren gemäß Anspruch 3, **dadurch gekennzeichnet, dass** das mobile Gerät die Zählung vornimmt und das Fortsetzungssignal auf Anweisung der Karte überträgt.

5. Verfahren gemäß Anspruch 4, **dadurch gekennzeichnet, dass** die Karte dem mobilen Gerät mit Hilfe von Befehlen STK Anweisungen erteilt.

6. Verfahren gemäß Anspruch 4, **dadurch gekennzeichnet, dass** die Karte mit Hilfe des Befehls "GET STATUS" Anweisungen erteilt.

7. Verfahren gemäß Anspruch 1, **dadurch gekennzeichnet, dass** es einen vorherigen Beurteilungsschritt (38) umfasst, bei dem man ermittelt, ob das zu sichernde Datenvolumen oder die entsprechende Wartefrist, um das mobile Gerät für den Benutzer verfügbar zu machen, größer ist als ein vorbestimmter Grenzwert, und
- man im günstigen Fall die Sicherung gemäß dem asynchronen Sicherungsmodus 40 durchführt, und
- man im ungünstigen Fall die Sicherung gemäß einem Standardmodus 41 durchführt.

8. Server für die Sicherung von persönlichen Daten eines Teilnehmers an einem schnurlosen Kommunikationsnetz, wobei die Daten zuvor in einem mobilen Gerät gespeichert werden, wobei der genannte Server geeignet ist, um eine erste Daten-Untereinheit aus einer zu sichernden Einheit zu sichern, **dadurch gekennzeichnet, dass** er ein so genanntes asynchrones Sicherungsprogramm "Server" umfasst, das die folgenden Funktionen ausführen kann:
- Empfang und Speicherung einer Daten-Untereinheit und Versetzen in Wartemodus gemäß einer Fristvorgabe,
- und am Ende der Fristvorgabe, Fortsetzung der Sicherung der nachfolgenden Daten-Untereinheiten.

9. Schnurlose tragbare Kommunikationsvorrichtung eines Teilnehmers an einem Kommunikationsnetz, die gespeicherte Daten und ein Sicherungsapplikationsprogramm "Vorrichtung" umfasst, das eine erste Daten-Untereinheit aus einer zu sichernden Dateneinheit an den Server zur Sicherung übertragen kann, **dadurch gekennzeichnet, dass** das Applikationsprogramm "Vorrichtung" gemäß einem asynchronen Sicherungsmodus 40:
- die Sicherung einer auf die erste Untereinheit folgenden Daten-Untereinheit um eine bestimmte Frist verzögern kann, um die Vorrichtung für den Benutzer benutzbar zu machen,
- und die Sicherung nach Ablauf der Frist fortsetzen kann.

10. Tragbare Vorrichtung gemäß Anspruch 9, **dadurch gekennzeichnet, dass** sie einen asynchronen Sicherungsmodus 40 und einen normalen Modus 41 umfasst.
